# EUROPÄISCHE PATENTSCHRIFT

(11) **EP 3 762 176 B1**
(45) Veröffentlichungstag und Bekanntmachung des Hinweises auf die Patenterteilung: **01.05.2024**
(21) Anmeldenummer: 19715393.5
(22) Anmeldetag: 07.03.2019
(51) Int. Cl.: B23K 26/066, B23K 26/06, B23K 26/067, B23K 26/0622

(54) **VERFAHREN UND VORRICHTUNG ZUR BEARBEITUNG MITTELS INTERFERIERENDER LASERSTRAHLUNG**
METHOD AND DEVICE FOR MACHINING BY MEANS OF INTERFERING LASER RADIATION
PROCÉDÉ ET DISPOSITIF D'USINAGE AU MOYEN DU RAYONNEMENT LASER INTERFÉRANT

(30) Priorität: 07.03.2018 DE 102018105254
(43) Veröffentlichungstag der Anmeldung: 13.01.2021
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: SIEMS, Malte Per, 07745 Jena (DE); NOLTE, Stefan, 07751 Jena (DE); RICHTER, Daniel, 99441 Magdala (DE); KRÄMER, Ria, 07743 Jena (DE); GOEBEL, Thorsten Albert, 07745 Jena (DE)
(74) Vertreter: Schneiders & Behrendt Bochum
(86) Internationale Anmeldenummer: PCT/EP2019/055651
(87) Internationale Veröffentlichungsnummer: WO 2019/170792

(56) Entgegenhaltungen:
- WO-A1-2008/049389
- CN-U- 206 464 696
- DE-A1-102011 011 734
- DE-A1-102014 103 748

## Beschreibung

Die Erfindung betrifft ein Verfahren und eine Vorrichtung zur Bearbeitung eines Objektes, insbesondere einer optischen Komponente, mittels interferierender Laserstrahlung.

Zur Bearbeitung von optischen Komponenten, um diese mit bestimmten Funktionalitäten auszustatten, gibt es verschiedenste Ansätze. Dabei hat sich insbesondere die Verwendung von kurzen oder ultrakurzen Laserpulsen (Pulsdauer im fs- bis ps-Bereich) zur Modifikation von transparenten, partiell transparenten oder auch absorptiven Materialien im Volumen oder an der Oberfläche als Schlüsselwerkzeug bewährt. Das Material der Komponente wird lokal begrenzt durch die hohe Leistung der Laserpulse erhitzt, ob bis zu der Schwelle, ab der durch den einzelnen Laserpuls ein Plasma im Material erzeugt wird, oder darunter. Im Ergebnis wird eine entsprechende lokal begrenzte Modifikation des Brechungsindex im Material der Komponente im Fokus der Laserstrahlung erzeugt, die Basis für die Funktion ist, z.B. als optisches Gitter.

Um die Komponente geeignet zu bearbeiten, muss der verwendete Laserstrahl fokussiert werden. Je nach Ziel und Art der Fokussierung akkumuliert der Laserstrahl von seiner Erzeugung im (nahezu) perfekt kollimierten Ausgangszustand entlang des Strahlverlaufs bis zum Zielobjekt unterschiedlich stark Aberrationen. Diese verschlechtern die optische Abbildungsqualität und vergrößern und verformen den fokalen Bereich im Material der zu bearbeitenden Komponente. Zur Erzeugung eines wohl definierten Fokus und einer ebenso wohl definierten Intensitätsverteilung der Laserstrahlung sind Optiken mit hoher numerischer Apertur notwendig. Mit zunehmender numerischer Apertur der Abbildungsoptik wächst jedoch wiederum die akkumulierte Aberration an. Häufig möchte man, z.B. zur Erzeugung eines optischen Gitters, eine Brechungsindexmodifikation mit definierter (meist periodischer) Intensitätsmodulation im Material der herzustellenden optischen Komponente erzeugen. Hierzu wird (aus Gründen der Kohärenz) der verwendete kollimierte Laserstrahl in zwei Teilstrahlen aufgeteilt, wobei die Teilstrahlen dann abgelenkt und fokussiert werden, so dass die Teilstrahlen in einer Bearbeitungszone in dem Material des Objektes zur Überlagerung kommen und dort interferieren. Das im Material entstehende Interferenzmuster (Hologramm) wird durch die Laserpulse in das Material eingeschrieben. Um die Kohärenzbedingung einzuhalten, wird dabei typischerweise eine dynamische Verzögerungsstrecke in einem der beiden Teilstrahlen verwendet (siehe EP 1 162 519 A1).

Für die beschriebene Vorgehensweise zur Erzeugung von Modifikationen im Material der herzustellenden optischen Komponente sind die akkumulierten Aberrationen ein wesentlicher Störfaktor, da durch die Aberrationen die Präzision bei der Strukturierung des Materials limitiert ist.

Weiterhin ist ein Nachteil der bekannten Ansätze zur Erzeugung periodischer Materialmodifikationen, dass zwar die mittlere Periode der Modifikation durch Kontrolle des Winkels zwischen den beiden im Material zusammenlaufenden, fokussierten Teilstrahlen beeinflusst werden kann, nicht jedoch der Periodenverlauf, d.h. die räumliche Modulation der Periode der erzeugten Modifikation. Dies wäre jedoch für bestimmte Funktionalitäten von optischen Komponenten wünschenswert.

Die DE 10 2011 011734 A1 (offenbarend alle Merkmale und Schritte des Oberbegriffs der Ansprüche 1 und 7) beschreibt eine Vorrichtung (sowie ein entsprechendes Verfahren) zur Interferenzstrukturierung einer flächigen Probe mit einem Laser, einem im Strahlengang des Lasers angeordneten Fokussierelement, mit dem die Laserstrahlung in einer ersten Raumrichtung (y) fokussierbar ist, einem im Strahlengang des Lasers angeordneten ersten Prisma, insbesondere einem Biprisma, mit dem die Laserstrahlung in einer zweiten, zur ersten Raumrichtung bevorzugt orthogonalen Raumrichtung (x) mit zwei Strahlenbündeln so auf ein Probenvolumen richtbar ist, dass die beiden Strahlenbündel innerhalb des Probenvolumens in einem Interferenzbereich interferieren, und einer Bewegungseinheit, mit der die Strahlenbündel der Laserstrahlung in der ersten, der zweiten oder der ersten und der zweiten Raumrichtung (x, y) bewegbar sind und/oder mit der die Probe im Probenvolumen in die erste, die zweite oder die erste und die zweite Raumrichtung (x, y) bewegbar ist.

Die CN 106 624 354 A offenbart eine Mehrstrahl-Laserinterferenz-Mikronanobearbeitungsvorrichtung und ein Verfahren, das auf einem Dammann-Gitter und Reflektoren basiert. Ein doppellagige Dammann-Transmissionsgitter wird als Strahlteiler verwendet und teilt einen einzelnen Laserstrahl, der kollimiert, aufgeweitet und geformt wird, in mehrere Strahlen kohärenten Lichts, wobei die mehreren Strahlen kohärenten Lichts eine gleiche Intensität aufweisen. Außerdem werden die Reflektoren auf Gleitbahnen für die Einstellung des Neigungswinkels zwischen den Lichtstrahlen und die Auswahl einer Bearbeitungsperiode verwendet, und es wird ein Lichtarray erhalten, das eine gleichmäßige Intensitätsverteilung erreicht. Die mehreren Strahlen kohärenten Lichts werden auf der Oberfläche eines zu bearbeitenden Materials gesammelt, um Interferenz zu erzeugen, so dass Interferenzlaserstreifen erhalten werden und daher eine periodische Parallelgraben-Mikronanostruktur bearbeitet wird.

Vor diesem Hintergrund ist es Aufgabe der Erfindung, ein gegenüber dem Stand der Technik verbessertes Verfahren und eine verbesserte Vorrichtung zur Bearbeitung eines Objektes mittels interferierender Laserstrahlung bereit zu stellen.

Diese Aufgabe löst die Erfindung durch ein Verfahren gemäß Anspruch 1.

Außerdem löst die Erfindung die Aufgabe durch eine Vorrichtung gemäß Anspruch 7.

Hinsichtlich der Verfahrensschritte der Erzeugung von Laserstrahlung als kollimierten Laserstrahl, der Aufteilung des Laserstrahls in zwei Teilstrahlen und der Ablenkung und Fokussierung der Teilstrahlen, sodass die Teilstrahlen in einer Bearbeitungszone in dem Material des Objektes zur Überlagerung kommen, entspricht das erfindungsgemäße Verfahren dem Stand der Technik gemäß der oben zitierten EP 1 162 519 B1.

Die Erfindung schlägt vor, dass die Intensitätsverteilung und/oder der Phasenverlauf über den Querschnitt des korrigierten Laserstrahls beeinflusst werden. Hierzu dient zweckmäßig eine Phasenmaske, wie sie an sich ebenfalls aus dem Stand der Technik bekannt ist. Phasenmasken werden zum Beispiel im Bereich der Fotolithographie eingesetzt, um die Abbildungsqualität und -auflösung zu optimieren. Eine Phasenmaske ist eine Platte aus transparentem Material, die strukturiert ist, sodass die senkrecht zur Ebene der Platte einfallende Laserstrahlung über den Querschnitt des Laserstrahls unterschiedliche optische Weglängen durch die Platte zurücklegt. Die Funktion der Phasenmaske basiert darauf, dass die beim Passieren der Platte erzeugte Phasenverschiebung der Laserstrahlung eine Funktion der optischen Dicke ist.

Bei einer möglichen Ausgestaltung erfolgt die Beeinflussung der Intensitätsverteilung und/oder des Phasenverlaufs über den Querschnitt des Laserstrahls mittels statischer oder dynamischer adaptiver optischer Elemente, um auf diese Weise, um auf diese Weise Abweichungen und nichtideale Eigenschaften der verwendeten optischen Komponenten flexibel kompensieren zu können.

Die Erfindung basiert auf der Erkenntnis, dass durch die Beeinflussung der Intensitätsverteilung und/oder des Phasenverlaufs über den Querschnitt des Laserstrahls Abweichungen in der Abbildung im Fokus der Teilstrahlen im zu bearbeitenden Objekt, die durch Aberrationen erzeugt werden, ausgeglichen werden können. Dadurch können mit einer gegenüber dem Stand der Technik signifikant geringeren eingebrachten Leistung der Laserstrahlung wohl definierte Modifikationen erzeugt und somit die entsprechenden Funktionalitäten mit hoher Qualität generiert werden.

Für die Modifikationen des Materials des Objektes zur Erzeugung der gewünschten optischen Funktionalität wird zweckmäßig gepulste Laserstrahlung verwendet, wobei die Pulsdauer 10 fs bis 100 ps beträgt und die Zentralwellenlänge im Bereich von 150 nm bis 100 µm liegt. Als Quelle zur Erzeugung derartiger Laserstrahlung dient zweckmäßig ein Kurzpulslaser (oder Ultrakurzpulslaser) an sich bekannter und kommerziell verfügbarer Art, beispielsweise ein Titan-Saphir-Laser oder auch einen modengekoppelter Faserlaser, bei dem als Lasermedium eine mit Seltenerdionen dotierte optische Faser zum Einsatz kommt, die mittels einer Laserdiode optisch gepumpt wird. Zur Erzielung der erforderlichen Leistungen wird die erzeugte Laserstrahlung zweckmäßig mittels eines oder mehrerer optischer Verstärker ebenfalls an sich bekannter und kommerziell verfügbarer Art verstärkt.

Bei einer besonders bevorzugten Ausgestaltung des erfindungsgemäßen Verfahrens erfolgt die Ablenkung und Fokussierung wenigstens eines Teilstrahls mittels adaptiver Optik. Die adaptive Optik kann genutzt werden, um den Phasen- und/oder Intensitätsverlauf über den Querschnitt des jeweiligen Teilstrahls zu modifizieren. Die notwendige Richtungsänderung und Fokussierung des jeweiligen Teilstrahls wird, wie im Stand der Technik, durch die Ablenk- und Fokussieroptik erreicht. Diese ist im einfachsten Falle aus einer Kombination aus Umlenkspiegel und Fokussieroptik aufgebaut. Alternative Realisierungen sind möglich, zum Beispiel auf Basis diffraktiver Optiken.

Gemäß der Erfindung umfasst die Ablenk- und Fokussieroptik vorzugsweise wenigstens ein (statisches oder dynamisches) adaptives optisches Element. Adaptive optische Elemente sind an sich aus dem Stand der Technik bekannt, zum Beispiel in Form von mechanisch deformierbaren oder verstellbaren Spiegeln oder Linsen. Das adaptive optische Element ermöglicht eine statische oder dynamische Kontrolle der Phasen-/Intensitätsverteilung in dem jeweiligen Teilstrahl. Im Sinne der Erfindung in ein adaptives optisches Element jedwedes Element, das eine anpassbare Kontrolle des Wellenfrontverlaufes der Laserstrahlung ermöglicht. Dadurch wird eine präzise Kontrolle des Intensitäts- und Wellenfrontverlaufes im fokalen Interferenzbereich im Material des Objektes ermöglicht. Damit lassen sich wohl definiert die Intensitätseinhüllende des jeweiligen Teilstrahls sowie auch die Mittenperiode und der Periodenverlauf der zu erzeugenden Modifikationen im Material des Objektes steuern bzw. beeinflussen. Als adaptives optisches Element eignet sich jedwedes aus dem Stand der Technik bekanntes statisch oder dynamisch anpassbares reflektives oder transmittives Element, das den Phasen-und/oder Intensitätsverlauf über den Querschnitt des Teilstrahls modifiziert. Durch die erfindungsgemäß eingesetzte adaptive Optik ist die gezielte Beeinflussung der resultierenden Modifikation möglich, da zum Beispiel durch die Verwendung von permanenten oder dynamisch adaptiven Spiegeln unerwünschte Aberrationen, die der jeweilige Teilstrahl über seinen Verlauf akkumuliert, einzelnen adressiert werden können. Insbesondere ermöglicht die adaptive Optik gezielt die Erzeugung einer periodischen Struktur im Material des zu bearbeitenden Objektes, wobei der Periodenverlauf durch entsprechende Anpassung des wenigsten einen adaptiven optischen Elementes variabel moduliert werden kann. Anders ausgedrückt kann durch die erfindungsgemäße Modifikation des Phasen- und/oder Intensitätsverlaufs über den Querschnitt wenigstens eines Teilstrahls der Intensitäts- und/oder Periodenverlauf einer in dem Objekt durch die interferierenden Teilstrahlen erzeugten Struktur flexibel angepasst werden.

Bei einer möglichen Ausgestaltung ist im Verlauf des Teilstrahls dem dynamisch anpassbaren adaptiven optischen Element nachgeordnet ein Wellenfrontsensor (z.B. Hartmann-Shack-Sensor) angeordnet ist, wobei eine Kontrolleinheit den Phasen- und/oder Intensitätsverlauf über den Querschnitt des Teilstrahls auf Basis der Ausgangssignale des Wellenfrontsensors regelt. Die Regelung der Wellenfront ermöglicht einen automatischen Ausgleich von dynamischen Imperfektionen der optischen Anordnung, beispielsweise durch Temperaturschwankungen oder akustische Störungen. Auf diese Weise ist eine stabil hohe Präzision bei der Erzeugung der gewünschten Strukturen in dem Material des Objektes gewährleistet.

Gemäß der Erfindung ist vorgesehen, dass die Ablenkung und Fokussierung jedes Teilstrahls eine Aberrationskorrektur umfasst. Durch die Verwendung von zum Beispiel je einer Abbildungslinse mit Aberrationskorrektur in der Ablenk-und Fokussieroptik jedes Teilstrahls kann mit Vorteil ein wesentlicher Teil der auftretenden sphärischen Abbildungsfehler kompensiert werden. Alternative optische Elemente zur Aberrationskorrektur, wie zum Beispiel ein modifiziertes Prisma oder einen Satz geeigneter Prismen, entsprechende Spiegel, sowie Kombinationen dieser Elemente, sind denkbar. Durch die Kombination von statischer und dynamischer Kompensation der auftretenden Aberrationen sowie der Beeinflussung der Intensitäts- und Wellenfrontverläufe im Fokus der Teilstrahlen mittels adaptiver Optik lassen sich besonders präzise und variabel anpassbare Intensitäts- und Periodenverläufe im Material des Objektes erzeugen.

Bei einer möglichen Ausgestaltung der Erfindung kann die Phasenmaske in den Strahlteiler integriert sein. Dadurch ergibt sich ein besonders kompakter und gegen Störungen unempfindlicher Aufbau.

Gemäß einer weiteren bevorzugten Ausgestaltung weist die Ablenk- und Fokussieroptik eine wenigstens einem der Teilstrahlen zugeordnete variable Verzögerungsstrecke auf. Die variable Verzögerungsstrecke dient dazu, die Interferenz der Laserpulse im Fokus der Teilstrahlen entsprechend den Kohärenzbedingungen sicherzustellen. Die Laserpulse müssen in der Überlagerungszone der Teilstrahlen in dem Material des Objektes zeitlich koinzidieren.

Bei einer weiteren bevorzugten Ausgestaltung der erfindungsgemäßen Vorrichtung ist vorgesehen, dass wenigstens ein statisches oder dynamisches adaptives optisches Element die Intensitätsverteilung und/oder den Phasenverlauf über den Querschnitt des Laserstrahls modifiziert.

Weiter bevorzugt kann eine abbildende Optik vorgesehen sein, die im Strahlverlauf vor dem Strahlteiler angeordnet ist. Die abbildende Optik vor dem Strahlteiler bewirkt eine Modifikation des Laserstrahls, die in beiden Teilstrahlen wirksam ist. Auch die abbildende Optik vor dem Strahlteiler kann zweckmäßig eine Aberrationskorrektur umfassen.

Nachfolgend werden Ausführungsbeispiele der Erfindung anhand der Figuren näher erläutert. Es zeigen:
- Fig. 1: schematische Darstellung einer erfindungsgemäßen Vorrichtung;
- Fig. 2: schematische Darstellung einer erfindungsgemäßen Vorrichtung in einer abgewandelten Ausführungsform;
- Fig. 3: schematische Darstellung der Ablenk- und Fokussieroptik bei dem Ausführungsbeispiel der Fig. 1.

In der nachfolgenden Figurenbeschreibung werden für die gleichen Elemente die gleichen Bezugszeichen und die gleichen Begriffe verwendet.

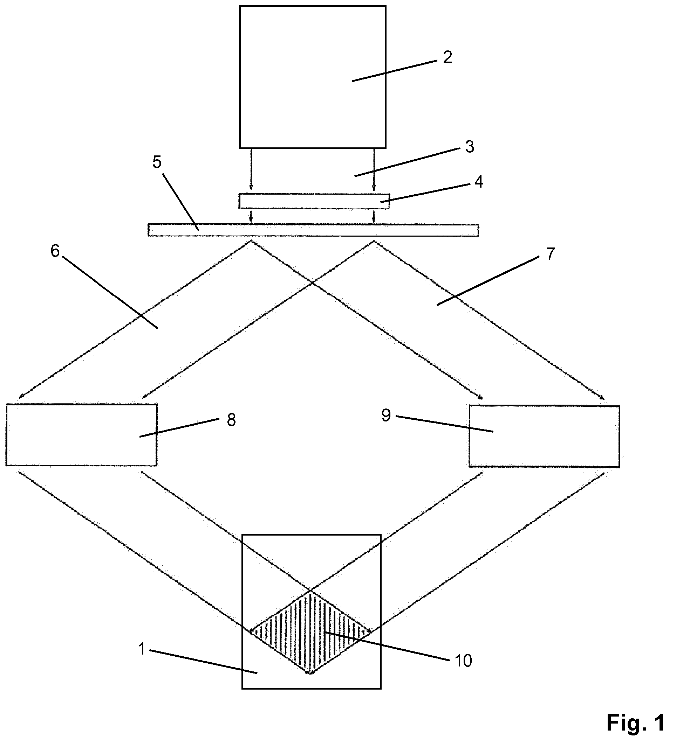

Die Figur 1 zeigt ein Ausführungsbeispiel einer erfindungsgemäßen Vorrichtung zur Bearbeitung eines Objektes 1 mittels interferierender Laserstrahlen. Das Objekt 1 kann aus transparentem, teiltransparentem oder absorptivem Material bestehen, jeweils bezogen auf die Wellenlänge der verwendeten Laserstrahlung. Die Vorrichtung umfasst einen Laser 2, der gepulste Laserstrahlung mit einer Pulsdauer von zum Beispiel 100 fs emittiert, wobei die Zentralwellenlänge zum Beispiel 1550 nm beträgt. Der Laser 2 emittiert die Laserstrahlung als kollimierten Laserstrahl 3. Der Laserstrahl 3 durchläuft eine Phasenmaske 4, die die Intensitätsverteilung und den Phasenverlauf über den Querschnitt des Laserstrahls 3 modifiziert. Durch die Phasenmaske 4 werden Abweichungen vom idealen Strahlverlauf, bedingt durch Nicht-Idealitäten der optischen Komponenten, ausgeglichen. Als nächstes durchläuft der Laserstrahl 3 einen Strahlteiler 5, der den Laserstrahl 3 in zwei Teilstrahlen 6 und 7 aufteilt. In jedem der Teilstrahlen 6, 7 ist eine Ablenk- und Fokussieroptik 8 bzw. 9 vorgesehen. Die Ablenk- und Fokussieroptiken 8, 9 bewirken die Überlagerung der Teilstrahlen 6, 7 in einer (bei dem Ausführungsbeispiele rautenförmigen) Bearbeitungszone 10 in dem Material des Objektes 1. Bei alternativen Konfigurationen können die beiden Teilstrahlen 6, 7 über dieselbe Oberfläche in das Objekt 1 einfallen. Ebenso können die Teilstrahlen 6, 7 im Extremfall direkt gegenläufig sein. Jede Strahlgeometrie, bei der die beiden Teilstrahlen 6, 7 im Volumen des Objektes 1 oder an dessen Oberfläche zur Überlagerung kommen, ist denkbar. Die beiden Ablenk- und Fokussieroptiken 8, 9 umfassen jeweils wenigstens ein adaptives optisches Element, bei dem es sich um ein statisch oder dynamisch anpassbares reflektierendes oder transmittives Element handelt, das den Phasen- und/oder Intensitätsverlauf über den Querschnitt des jeweiligen Teilstrahls 6, 7 modifiziert.

Die adaptiven optischen Elemente ermöglichen eine Kontrolle des Intensitäts- und Wellenfrontverlaufes im fokalen Interferenzbereich 10. Auf diese Weise lassen sich sowohl die Intensitätseinhüllende des jeweiligen Teilstrahls 6, 7 sowie auch die Mittenperiode und der Periodenverlauf der im Material des Objektes 1 zu erzeugenden Modifikationen steuern und beeinflussen. Erfindungsgemäß wird die adaptive Optik kombiniert mit einer Aberrationskorrektur, um Abbildungsfehler aufgrund von Aberrationen zu korrigieren.

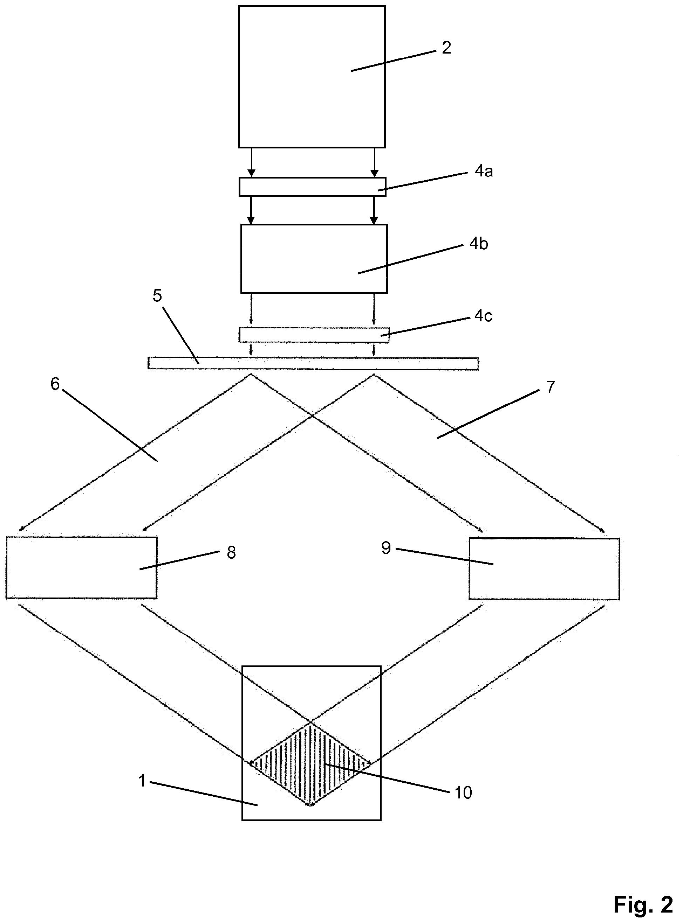

Die Ausführungsform der Figur 2 ist mit derjenigen der Figur 1 weitgehend identisch, bis auf die beiden adaptiven optischen Elemente 4a, 4c zur Phasen- und Intensitätsmodifikation und die im Strahlverlauf vor dem Strahlteiler 5 angeordnete abbildende Optik 4b. Das Problem der Kompensation der system inhärenten Aberrationen und der Wechselwirkungen zwischen Beugung und Fokussierung durch hohe numerische Aperturen lässt sich durch den Figur 2 illustrierten Ansatz in besonders effizienter Weise lösen. Durch die Verwendung einer abbildenden Optik 4b mit Aberrationskorrektur für eine gegebene Konfiguration (z.B. modifiziertes Prisma oder mehrerer Prismen zur Erhöhung des Arbeitsabstandes, Spiegel) lässt sich im Vergleich zu einer sphärischen Optik (z.B. Zylinderlinse) ein Großteil der Abbildungsfehler kompensieren. Die adaptiven optischen Elemente 4a, 4c ermöglichen die zusätzliche Kontrolle der Abbildungsqualität. Wiederum kommen Ablenk- und Fokussieroptiken 8, 9 zum Einsatz zur Erzeugung der Interferenzraute 10 im Material des Objektes 1. Dies ermöglicht einen großen Arbeitsabstand von der Phasenmaske 4a, 4c und zusätzlich einen großen Modulationsbereich. Die abbildende Optik 4b wirkt auf beide Teilstrahlen 6, 7, wohingegen die verwendeten Ablenkoptiken 8, 9 jeweils einzeln mit nur einem Teilstrahl 6, 7 interagieren. Damit lassen sich durch Verwendung von statisch- oder dynamisch-adaptiven Spiegeln ungewollte Aberrationen der einzelnen Teilstrahlen (z.B. der einzelnen Beugungsordnungen bei einem auf Beugung basierenden Strahlteiler 5) adressieren sowie gezielt Phasen- und Intensitätsverteilungsmanipulationen vornehmen, um insgesamt im Interferenzgebiet 10 wohldefiniert die Intensitätseinhüllende sowie auch die Mittenperiode und den Periodenverlauf der im Objekt 1 erzeugten Modifikationen anpassen zu können.

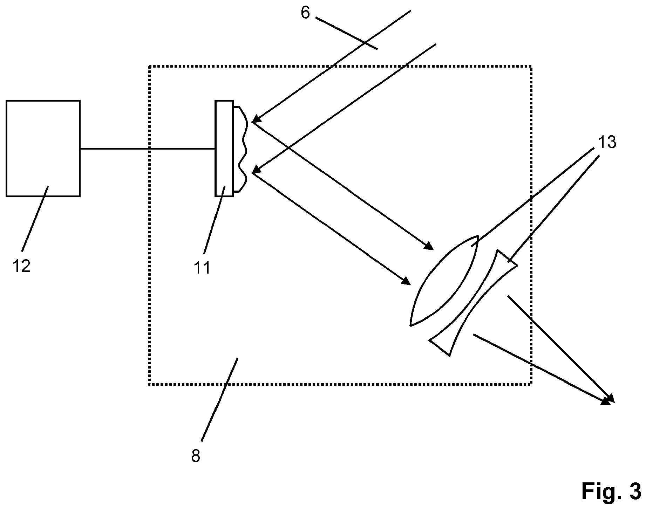

Die Figur 3 zeigt beispielhaft die Ausgestaltung der Ablenk- und Fokussieroptik 8 schematisch. Diese umfasst zur Ablenkung des Teilstrahls 6 einen dynamisch adaptiven Spiegel 11, der von einer externen Kontrolleinheit 12 angesteuert wird. Der adaptive Spiegel 11 ermöglicht es, die Wellenfront des Teilstrahls 6 zu beeinflussen. Auf diese Weise können unerwünschte Aberrationen, die der Teilstrahl 6 über seinen Verlauf akkumuliert, einzeln adressiert und kompensiert werden. Außerdem ermöglicht die Beeinflussung der Wellenfront mittels des adaptiven Spiegels 11 gezielt die Erzeugung einer periodischen Struktur im Material des Objektes 1, wobei der Periodenverlauf durch entsprechende Anpassung der Oberflächenform des Spiegels 11 variabel moduliert werden kann. Eine Fokussieroptik 13 weist eine Aberrationskorrektur auf. Hierzu ist eine Abbildungslinse mit einer zusätzlichen Linse zur Aberrationskorrektur vorgesehen. Durch die Aberrationskorrektur wird zum großen Teil der auftretende sphärische Abbildungsfehler kompensiert. Von besonderem Vorteil ist, dass durch die Kombination von dynamischer Kompensation mittels adaptiver Optik mit statischer Aberrationskorrektur der Wellenfrontverlauf im Fokus der Teilstrahlen 6, 7 besonders präzise und variabel anpassen lässt, um die gewünschten Intensitäts- und Periodenverläufe im Material des Objektes variabel zu erzeugen.

Optional kann bei dem Ausführungsbeispiel der Figur 2 im Verlauf des Teilstrahls 6 hinter dem adaptiven Spiegel ein Wellenfrontsensor (nicht dargestellt) angeordnet sein. Dieser kann z.B. über einen Strahlteiler zwischen Spiegel 11 und Fokussieroptik 13 angebunden sein. Der Wellenfrontsensor erfasst über den Strahlquerschnitt den Phasen- und/oder Intensitätsverlauf, wobei die Kontrolleinheit 12 die Wellenfront entsprechend auf einen Sollverlauf regelt.

## Patentansprüche

1. Verfahren zur Bearbeitung eines Objektes (1) mittels interferierender Laserstrahlen, mit den folgenden Verfahrensschritten:
- Erzeugen von Laserstrahlung als kollimierten Laserstrahl (3),
- Beeinflussung der Intensitätsverteilung und/oder des Phasenverlaufs über den Querschnitt des Laserstrahls,
- Aufteilen des Laserstrahls (3) in zwei Teilstrahlen (6, 7), und **gekennzeichnet durch**:
- Ablenkung und Fokussierung der Teilstrahlen (6, 7), so dass die Teilstrahlen (6, 7) in einer Bearbeitungszone (10) in dem Material des Objektes (1) zur Überlagerung kommen,
wobei die Ablenkung und Fokussierung jedes Teilstrahls (6, 7) eine Aberrationskorrektur umfasst.

2. Verfahren nach Anspruch 1, **dadurch gekennzeichnet, dass** die Laserstrahlung gepulst ist, wobei die Pulsdauer 10 fs bis 10 ps beträgt und die Zentralwellenlänge im Bereich von 150 nm bis 10 µm liegt.

3. Verfahren nach Anspruch 1 oder 2, **dadurch gekennzeichnet, dass** die Ablenkung und Fokussierung wenigstens eines Teilstrahls (6, 7) mittels adaptiver Optik (11) erfolgt.

4. Verfahren nach Anspruch 3, **dadurch gekennzeichnet, dass** die adaptive Optik (11) den Phasen- und/oder Intensitätsverlauf über den Querschnitt des Teilstrahls (6, 7) modifiziert.

5. Verfahren nach einem der Ansprüche 1 bis 4, **dadurch gekennzeichnet, dass** durch Modifikation des Phasen- und/oder Intensitätsverlaufs über den Querschnitt wenigstens eines Teilstrahls (6, 7) der Intensitäts- und/oder Periodenverlauf einer in dem Objekt (1) durch die interferierenden Teilstrahlen (6, 7) erzeugten Struktur angepasst wird.

6. Verfahren nach einem der Ansprüche 1 bis 5, **dadurch gekennzeichnet, dass** die Beeinflussung der Intensitätsverteilung und/oder des Phasenverlaufs über den Querschnitt des Laserstrahls mittels statischer oder dynamischer adaptiver optischer Elemente (4a, 4c) erfolgt.

7. Vorrichtung zur Bearbeitung eines Objektes mittels interferierender Laserstrahlen, umfassend:
- einen Laser (2) , der Laserstrahlung als kollimierten Laserstrahl (3) erzeugt,
- eine Phasenmaske (4, 4a ,4c), die die Intensitätsverteilung und/oder den Phasenverlaufs über den Querschnitt des Laserstrahls (3) modifiziert,
- einen Strahlteiler (5), der den Laserstrahl (3) in zwei Teilstrahlen aufteilt (6, 7), und
gekennzeichnent durch:
- eine Ablenk- und Fokussieroptik (8, 9), die die Teilstrahlen in einer Bearbeitungszone (10) in dem Material des Objektes (1) überlagert,
wobei die Ablenk- und Fokussieroptik (8, 9) in jedem der Teilstrahlen (6, 7) eine Aberrationskorrektur umfasst.

8. Vorrichtung nach Anspruch 7, **dadurch gekennzeichnet, dass** die Ablenk- und Fokussieroptik (8, 9) wenigstens ein adaptives optisches Element (11) umfasst.

9. Vorrichtung nach Anspruch 8, **dadurch gekennzeichnet, dass** das wenigstens eine adaptive optische Element (11) ein statisch oder dynamisch anpassbares reflektives oder transmittives Element ist, das den Phasen- und/oder Intensitätsverlauf über den Querschnitt des Teilstrahls (6, 7) modifiziert.

10. Vorrichtung nach einem der Ansprüche 7 bis 9, **dadurch gekennzeichnet, dass** durch Modifikation des Phasen- und Intensitätsverlaufs über den Querschnitt wenigstens eines Teilstrahls (6, 7) der Intensitäts- und Periodenverlauf einer in dem Objekt (1) durch die interferierenden Teilstrahlen (6, 7) erzeugten Struktur anpassbar ist.

11. Vorrichtung nach einem der Ansprüche 7 bis 9, **dadurch gekennzeichnet, dass** im Verlauf des Teilstrahls (6, 7) dem dynamisch anpassbaren adaptiven optische Element (11) nachgeordnet ein Wellenfrontsensor angeordnet ist, wobei eine Kontrolleinheit (12) den Phasen- und/oder Intensitätsverlauf über den Querschnitt des Teilstrahls (6, 7) auf Basis des Ausgangssignals des Wellenfrontsensors regelt.

12. Vorrichtung nach einem der Ansprüche 7 bis 11, **dadurch gekennzeichnet, dass** die Phasenmaske (4) in den Strahlteiler (5) integriert ist.

13. Vorrichtung nach einem der Ansprüche 7 bis 12, **dadurch gekennzeichnet, dass** die Ablenk- und Fokussieroptik (8, 9) eine wenigstens einem der Teilstrahlen (6, 7) zugeordnete variable Verzögerungsstrecke aufweist.

14. Vorrichtung nach einem der Ansprüche 7 bis 13, **dadurch gekennzeichnet, dass** wenigstens ein statisches oder dynamisches adaptives optisches Element (4a, 4c) die Intensitätsverteilung und/oder den Phasenverlauf über den Querschnitt des Laserstrahls (3) modifiziert.

15. Vorrichtung nach einem der Ansprüche 7 bis 14, **gekennzeichnet durch** eine abbildende Optik (4b), die im Strahlverlauf vor dem Strahlteiler (5) angeordnet ist.

## Claims

1. Method for processing an object (1) by means of interfering laser beams, comprising the following process steps:
- Generating laser radiation as a collimated laser beam (3),
- influencing the intensity distribution and/or the phase progression over the cross-section of the laser beam,
- splitting the laser beam (3) into two partial beams (6, 7), and **characterized by**
- deflecting and focusing the partial beams (6, 7) so that the partial beams (6, 7) are superimposed in a processing zone (10) in the material of the object (1), wherein the deflection and focusing of each partial beam (6, 7) comprises an aberration correction.

2. Method according to claim 1, **characterized in that** the laser radiation is pulsed, the pulse duration being 10 fs to 10 ps and the central wavelength is in the range from 150 nm to 10 µm.

3. Method according to claim 1 or 2, **characterized in that** the deflection and focusing of at least one partial beam (6, 7) takes place by means of adaptive optics (11).

4. Method according to claim 3, **characterized in that** the adaptive optics (11) modifies the phase progression and/or intensity progression over the cross-section of the partial beam (6, 7).

5. Method according to any one of claims 1 to 4, **characterized in that** by modifying the phase progression and/or intensity progression over the cross-section of at least one partial beam (6, 7), the intensity progression and/or period progression of a structure generated in the object (1) by the interfering partial beams (6, 7) is adapted.

6. Method according to any one of claims 1 to 5, **characterized in that** the influencing of the intensity distribution and/or the phase progression over the cross-section of the laser beam is effected by means of static or dynamic adaptive optical elements (4a, 4c).

7. Device for processing an object by means of interfering laser beams. comprising
- a laser (2) which generates laser radiation as a collimated laser beam (3),
- a phase mask (4, 4a, 4c) which modifies the intensity distribution and/or the phase progression over the cross-section of the laser beam (3),
- a beam splitter (5), which splits the laser beam (3) into two partial beams (6, 7), and **characterized by**
- a deflection and focusing optics (8, 9), which superimpose the partial beams in a processing zone (10) in the material of the object (1), wherein the deflection and focusing optics (8, 9) in each of the partial beams (6, 7) comprise an aberration correction.

8. Device according to claim 7, **characterized in that** the deflection and focusing optics (8, 9) comprise at least one adaptive optical element (11).

9. Device according to claim 8, **characterized in that** the at least one adaptive optical element (11) is a statically or dynamically adaptive reflective or transmissive element which modifies the phase progression and/or intensity progression over the cross-section of the partial beam (6, 7).

10. Device according to any one of claims 7 to 9, **characterized in that** by modifying the phase progression and intensity progression over the cross-section of at least one partial beam (6, 7), the intensity progression and period progression of a structure generated in the object (1) by the interfering partial beams (6, 7) can be adapted.

11. Device according to any one of claims 7 to 9, **characterized in that**, in the course of the partial beam (6, 7), downstream of a dynamically adaptable adaptive optical element (11) a wavefront sensor is arranged, wherein a control unit (12) regulates the phase progression and/or intensity progression over the cross-section of the partial beam (6, 7) on the basis of the output signal of the wavefront sensor.

12. Device according to any one of claims 7 to 11, **characterized in that** the phase mask (4) is integrated into the beam splitter (5).

13. Device according to any one of claims 7 to 12, **characterized in that** the deflection and focusing optics (8, 9) have a variable delay path assigned to at least one of the partial beams (6, 7).

14. Device according to any one of claims 7 to 13, **characterized in that** at least one static or dynamic adaptive optical element (4a, 4c) modifies the intensity distribution and/or the phase progression over the cross-section of the laser beam (3).

15. Device according to any one of claims 7 to 14, **characterized by** an imaging optical element (4b) which is arranged in the beam path in front of the beam splitter (5).

## Revendications

1. Procédé d'usinage d'un objet (1) au moyen de rayons laser interférents, comprenant les étapes de procédé suivantes:
- Génération d'un rayonnement laser sous forme de faisceau laser collimaté (3),
- influence de la répartition de l'intensité et/ou l'évolution de la phase sur la section transversale du faisceau laser,
- division du faisceau laser (3) en deux faisceaux partiels (6, 7), et **caractérisé par**:
- déviation et focalisation des faisceaux partiels (6, 7) de sorte que les faisceaux partiels (6, 7) viennent se superposer dans une zone de traitement (10) dans le matériau de l'objet (1), la déviation et la focalisation de chaque faisceau partiel (6, 7) comprenant une correction d'aberration.

2. Procédé selon la revendication 1, **caractérisé en ce que** le rayonnement laser est pulsé, avec une durée d'impulsion étant de 10 fs à 10 ps et la longueur d'onde centrale comprise entre 150 nm à 10 µm.

3. Procédé selon la revendication 1 ou 2, **caractérisé en ce que** la déviation et la focalisation d'au moins un faisceau partiel (6, 7) sont réalisées au moyen d'une optique adaptative (11).

4. Procédé selon la revendication 3, **caractérisé en ce que** la optique adaptative (11) modifie l'évolution de la phase et/ou l'évolution de l'intensité sur la section transversal du faisceau partiel (6, 7).

5. Procédé selon l'une des revendications 1 à 4, **caractérisé en ce que** par modification l'évolution de la phase et/ou l'évolution de l'intensité sur la section transversale d'au moins un faisceau partiel (6, 7), on adapte l'évolution de l'intensité et/ou l'évolution de la période d'une structure générée dans l'objet (1) par les faisceaux partiels (6, 7) qui interférents.

6. Procédé selon l'une des revendications 1 à 5, **caractérisé en ce que** l'influence la répartition de l'intensité et/ou l'évolution de la phase sur la section transversale du faisceau laser s'effectue au moyen d'éléments optiques adaptatifs statiques ou éléments optiques adaptatifs dynamiques (4a, 4c).

7. Dispositif pour d'usinage d'un objet au moyen de rayons laser interférents, comprenant:
- un laser (2) qui émet un rayonnement laser sous la forme d'un faisceau laser collimaté (3)
- un masque de phase (4, 4a, 4c) qui modifie la répartition d'intensité et/ou l'évolution de la phase sur la section 2ransversal du faisceau laser (3),
- un diviseur de faisceau (5) qui divise le faisceau laser (3) en deux faisceaux partiels (6, 7), et
**caractérisé par**:
- une optique de déviation et de focalisation (8, 9), qui superimpose les faisceaux partiels dans une zone de traitement (10) dans le matériau de l'objet (1), dans lequel l'optique de déviation et de focalisation (8, 9) comprend une correction d'aberration dans chacun des faisceaux partiels (6, 7).

8. Dispositif selon la revendication 7, **caractérisé en ce que** l'optique de déviation et de focalisation (8, 9) comprend au moins un élément optique adaptatif (11).

9. Dispositif selon la revendication 8, **caractérisé en ce que** ledit au moins un élément optique adaptatif (11) est un élément optique réfléchissant statique ou dynamique réflectif ou transmissif adaptable, qui modifie l'évolution de la phase et/ou l'évolution de l'intensité sur la section transversale du faisceau partiel (6, 7).

10. Dispositif selon l'une des revendications 7 à 9, **caractérisé en ce que** la modification l'évolution de la phase et l'évolution de l'intensité sur la section transversale d'au moins un faisceau partiel (6, 7) l'évolution de l'intensité et l'évolution de la période d'une structure générée dans l'objet (1) peuvent être adaptée par les faisceaux partiels qui interférents (6, 7).

11. Dispositif selon l'une des revendications 7 à 9, **caractérisé en ce qu'**un capteur de front d'onde est disposé sur le parcours du faisceau partiel (6, 7) en aval de l'élément optique adaptatif (11) adaptable dynamiquement, une unité de contrôle (12) contrôlant l'évolution de la phase et/ou l'évolution de l'intensité sur la section transversale du faisceau partiel (6, 7) sur la base du signal de sortie du capteur de front d'onde.

12. Dispositif selon l'une des revendications 7 à 11, **caractérisé en ce que** le masque de phase (4) est intégré au diviseur de faisceau (5).

13. Dispositif selon l'une des revendications 7 à 12, **caractérisé en ce que** l'optique de déviation et de focalisation (8, 9) présente une distance de retard variable associée à au moins un des faisceaux partiels (6, 7).

14. Dispositif selon l'une des revendications 7 à 13, **caractérisé en ce qu'**au moins un élément optique adaptif statique ou dynamique (4a, 4c) modifie la répartition de l'intensité et/ou l'évolution de la phase sur la section transversale du faisceau laser (3).

15. Dispositif selon l'une des revendications 7 à 14, **caractérisé en ce que** par une optique de formation d'image (4b) est dispose sur le trajet du faisceau avant le diviseur de faisceau (5).
